# EUROPÄISCHE PATENTSCHRIFT

(11) **EP 4 140 269 B1**
(45) Veröffentlichungstag und Bekanntmachung des Hinweises auf die Patenterteilung: **24.07.2024**
(21) Anmeldenummer: 21193231.4
(22) Anmeldetag: 26.08.2021
(51) Int. Cl.: A01B 33/02, A01B 33/10, A01B 33/16

(54) **UMKEHRFRÄSE**
REVERSE CUTTER
ENFOUISSEUSE

(43) Veröffentlichungstag der Anmeldung: 01.03.2023
(73) Patentinhaber: Rapid Technic AG, 8956 Killwangen (CH)
(72) Erfinder: Häfeli, Christian, 6332 Hagendorn (CH)
(74) Vertreter: Fenner, Seraina

(56) Entgegenhaltungen:
- DE-B3- 102007 031 105
- US-A- 4 151 883
- US-A- 4 556 113
- US-A- 4 669 549
- US-A- 4 776 290

## Beschreibung

Die Erfindung betrifft eine Umkehrfräse zum antriebsverbundenen Anbau an einer Arbeitsmaschine, vorzugsweise zum frontseitigen Anbau an einer einachsigen, Holmen geführten Arbeitsmaschine, beinhaltend ein Gehäuse, eine darin angeordnete sich quer zur Fahrtrichtung erstreckende Messerwelle und eine Siebeinheit.

Umkehrfräsen sind sowohl als Anbaugeräte an Traktoren wie auch an einachsigen Arbeitsmaschinen bekannt.

Umkehrfräsen werden dazu genutzt, um Böden für die Saat oder Neubepflanzung zu präparieren. Dadurch, dass die Messerwelle sich bei einer Umkehrfräse in entgegensetzte Richtung zur Arbeitsfahrtrichtung dreht wird die gesamte Bodenmasse über die Messerwelle gefördert. Durch eine im hinteren Bereich angeordnete Siebeinheit wird die feine Erde von den groben Erdklumpen und Steinen so getrennt, dass die groben Bestandteile nicht durch das Sieb fallen und gleich wieder in den Boden geführt werden. Die feine Erde, welche durch das Sieb hindurchtritt, überdeckt anschliessend die groben Bestandteile, indem die Erde mit einem dem Sieb anschliessenden Blech diese nach unten führt und dadurch die groben Bestandteile überdeckt. Nun ist es aber heute auch durchaus für gewisse Anwendungen in der Bepflanzung bzw. im Anbau gewünscht, dass der Boden keine solchen unterschiedlichen Schichten von unterschiedlicher Bodenstruktur aufweist sondern eine mehr oder weniger homogene Durchmischung von feinen wie auch groben Bestandteilen der Erde vorliegt.

Die DE 10 2007 031 105 B3 offenbart eine Umkehrfräse für einen Einachsschlepper mit einer Siebgitteranordnung, welche zum Reinigen hochschwenkbar ist. Die Siebgitteranordnung weist ein Siebgitter und eine dahinter angeordnete Rückwand auf. Nachteilig hierbei ist, dass die beiden Elemente derart miteinander verbunden sind, dass sie nur zusammen an der Umkehrfräse eingesetzt werden können. US 4556113 A offenbart eine weitere Umkehrfräse.

Aus dem Stand der Technik sind keine Umkehrfräsen bekannt, die es ermöglichen den Boden einerseits in die verschiedenen Schichten mit den unterschiedlichen Bodenbestanteilen zu separieren oder bei Bedarf eine komplette Durchmischung der unterschiedlichen Bodenbestandteile des bearbeiteten Bodens ohne Schichten zu erzielen.

Es ist Aufgabe der Erfindung eine Umkehrfräse vorzuschlagen, die es ermöglicht den Boden so zu bearbeiten, dass unterschiedliche Schichten von Bodenstrukturen gebildet werden, das heisst, dass die fein krümlige Erde über den groben Bestandteilen aufliegt, aber dass die Umkehrfräse auch dazu geeignet ist, eine homogene Durchmischung der unterschiedlichen Bestandteile des Bodens zu erzielen, sodass keine Schichtentrennung erfolgt. Zudem soll die Umkehrfräse einfach in der Handhabung sowie selbstreinigend sein, um die Unterhaltskosten zu minimieren.

Diese Aufgabe wird erfindungsgemäss dadurch gelöst, dass die Siebeinheit der Umkehrfräse ein Prallblech und einen Rechen beinhalten, wobei das Prallblech und der Rechen jeweils separat bzw. unabhängig voneinander am Gehäuse befestigt sind. Das heisst auch, dass der Rechen und das Prallblech einzeln am Gehäuse befestigt sind. Aus dem Stand der Technik bildet der Rechen und das Prallblech immer eine fest miteinander verbundene Einheit, die dann in die Umkehrfräse eingebaut wird was hier nicht der Fall ist. Bei der vorliegenden Erfindung muss also jede der beiden Komponenten separat vom Gehäuse entfernt bzw. daran befestigt werden.

Die erfindungsgemässe Umkehrfräse dient vorzugsweise dem frontseitigen Anbau und ist antriebsverbunden an einer Arbeitsmaschine angeordnet. Vorzugsweise wird die Umkehrfräse mit einer einachsigen, Holmen geführten Arbeitsmaschine betrieben, es ist hier aber durchaus denkbar die Umkehrfräse mit einer zweiachsigen Arbeitsmaschine wie mit einem Traktor oder auch einem Raupenfahrzeug zu betreiben bzw. daran anzubauen. Die erfindungsgemässe Umkehrfräse beinhaltet ein Gehäuse und eine darin angeordnete sich quer zur Fahrtrichtung erstreckende Messerwelle. Die Messerwelle rotiert entgegen der Fahrtrichtung während des Arbeitseinsatzes. Zudem beinhaltet die Umkehrfräse eine Siebeinheit, wobei die Siebeinheit ein Prallblech und einen Rechen beinhaltet. Das Prallblech und der Rechen sind jeweils separat bzw. unabhängig voneinander am Gehäuse befestigt.

Dies dient dazu, dass die Umkehrfräse auch ohne Rechen betrieben werden kann. Ein solcher Umbau kann jederzeit durchgeführt werden, es werden dazu weder Werkzeug noch zusätzliche Teile benötigt. Dies ermöglicht es, dass beispielsweise der Gärtner, der eine solche Umkehrfräse zur Bodenarbeit benutzt, diese mit dem Rechen betreiben kann, um einen in unterschiedliche Schichten bearbeiteten Boden zu erhalten oder aber wenn er die Umkehrfräse nur mit dem Prallblech betreibt, einen durchmischten Boden zu erhalten, der unterschiedlich grosse Erdbestandteile durch die ganze Schicht enthält, es findet dann also keine Separierung statt. Dies ist bei bestimmten Anwendungen im Gartenbau durchaus sinnvoll und vom Gärtner erwünscht. Aufgrund der vorliegenden Erfindung kann das hier mit ein und derselben Umkehrfräse erreicht werden.

Erfindungsgemäß ist zur Befestigung der Siebeinheit mindestens ein Halter am Gehäuse angeordnet, wobei das Prallblech und der Rechen der Siebeinheit jeweils unabhängig voneinander am Halter befestigt sind. Dies ermöglicht es, wie oben beschrieben, dass entweder nur das Prallblech oder das Prallblech und der Rechen bzw. die Siebeinheit am Halter montiert sind.

Vorzugsweise ist der Halter beweglich am Gehäuse angeordnet. Dazu wird beispielsweise der Halter am Seitenblech des Gehäuses befestigt, so dass der Halter leicht schwenken kann. Diese leichte Beweglichkeit bringt den Effekt mit sich, dass sich die Erde nicht so leicht an der Umkehrfräse festsetzt und die Erde abgeschüttelt wird. Was eine Art selbstreinigende Wirkung hat.

Es hat sich als vorteilhaft gezeigt, wenn der Halter gefedert bzw. gedämpft am Gehäuse angeordnet ist. Dies wird vorzugsweise dadurch erreicht, wenn der Halter an mindestens einem Dämpferelement anliegt. Der Dämpfer oder die Dämpfer sind am Gehäuse befestigt. Auch das bringt den Effekt der Selbstreinigung mit sich, da der Halter und dadurch auch die Siebeinheit leicht schwingen. Zudem schont ein gedämpfter oder gefederter Aufbau die Bauteile der Vorrichtung.

Erfindungsgemäß ist der Rechen formschlüssig vom Halter aufgenommen. Dadurch ist der Rechen optimal positioniert und geführt.

Vorzugsweise ist der Rechen aus einem Rohr und mehreren, dem Rohr entlang der Rohrmittelachse, nebeneinander, angeordneten Zinken gebildet. Dadurch, dass der Rechen durch separat befestigte Zinken gebildet ist, können diese auch einzeln ausgetauscht werden, was die Unterhalts- und Wartungskosten des Rechens reduziert.

Vorzugsweise wird dazu ein Vierkantrohr verwendet in das Bohrungen eingebracht sind, durch die die einzelnen Zinken hindurchgesteckt werden. Selbstverständlich ist auch ein anderer Aufbau eines Rechens denkbar.

Eine weitere Ausgestaltungsmöglichkeit der Erfindung besteht darin, dass im Rohr ein Federelement angeordnet ist, welches Bohrungen aufweist durch die sich die Zinken hindurch erstrecken. Vorzugsweise ist das Federelement im Inneren des Vierkantrohres angeordnet und erstreckt sich über die gesamte Länge des Rohres. Als bevorzugt hat sich gezeigt, wenn das Federelement aus einem Elastomer hergestellt ist.

Es ist zu bevorzugen, wenn der Halter als U-Profil ausgebildet ist und der Rechen darin eingelegt ist. Dadurch kann der Rechen von oben in das U-Profil hineingestellt werden und ist formschlüssig geführt.

Es ist von Vorteil, wenn der Halter an der Unterseite Bohrungen aufweist, durch die die Zinken des Rechens hindurchragen.

Durch die Anordnung des Prallblechs auf dem Halter ist der Rechen auch gleich gegen oben hin fixiert. Zudem ist der Rechen mittels des Prallblechs im Halter gesichert angeordnet und kann nicht aus dem Halter herausspringen. Das Prallblech ist mittels Befestigungsmitteln vorzugsweise Klappsplinte am Halter fixiert.

Vorzugsweise erstreckt sich der Halter über die komplette breite der Umkehrfräse. Dies hat den Vorteil, dass der Rechen und das Prallblech auch über die ganze Breite geführt und gestützt sind. Jedoch sind auch einzelne Halter vorstellbar, die verteilt über die Breite der Umkehrfräse am Gehäuse angeordnet sind und an denen der Rechen und das Prallblech fixierbar sind.

Als bevorzugte Ausführungsform hat sich gezeigt, wenn das Prallblech formschlüssig am Halter befestigt ist. Vorzugsweise wird das Prallblech auf den Halter geschoben und dort fixiert, vorzugsweise mit Schnellspannelementen wie beispielsweise Klappsplinte.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine Seitenansicht einer erfindungsgemässen Umkehrfräse mit Rechen und Prallblech und eine dazugehörige Schnittansicht,
- Fig. 2: eine Schnittansicht einer erfindungsgemässen Umkehrfräse mit Rechen und Prallblech,
- Fig. 3: eine Explosionsdarstellung einer erfindungsgemässen Umkehrfräse mit Rechen und Prallblech,
- Fig. 4: eine Schnittansicht einer erfindungsgemässen Umkehrfräse ohne Rechen nur mit Prallblech und
- Fig. 5: einen Ausschnitt eines Querschnitts durch den Halter mit befestigtem Rechen und Prallblech.

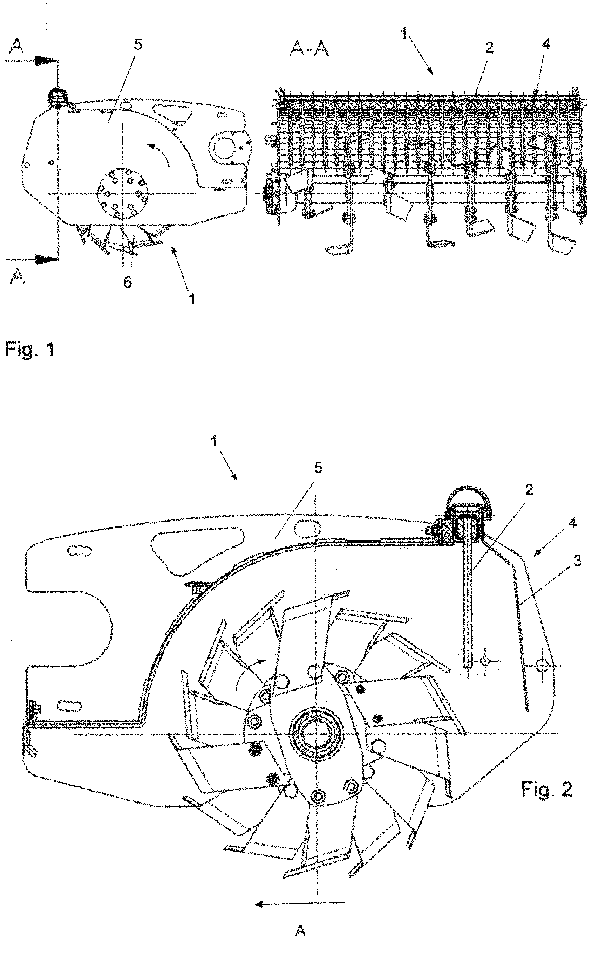

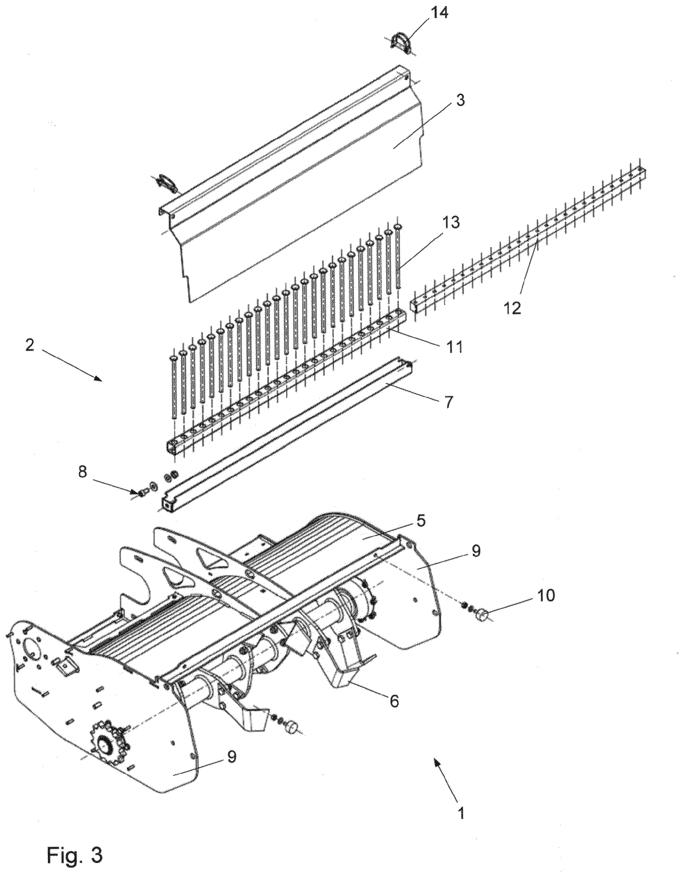

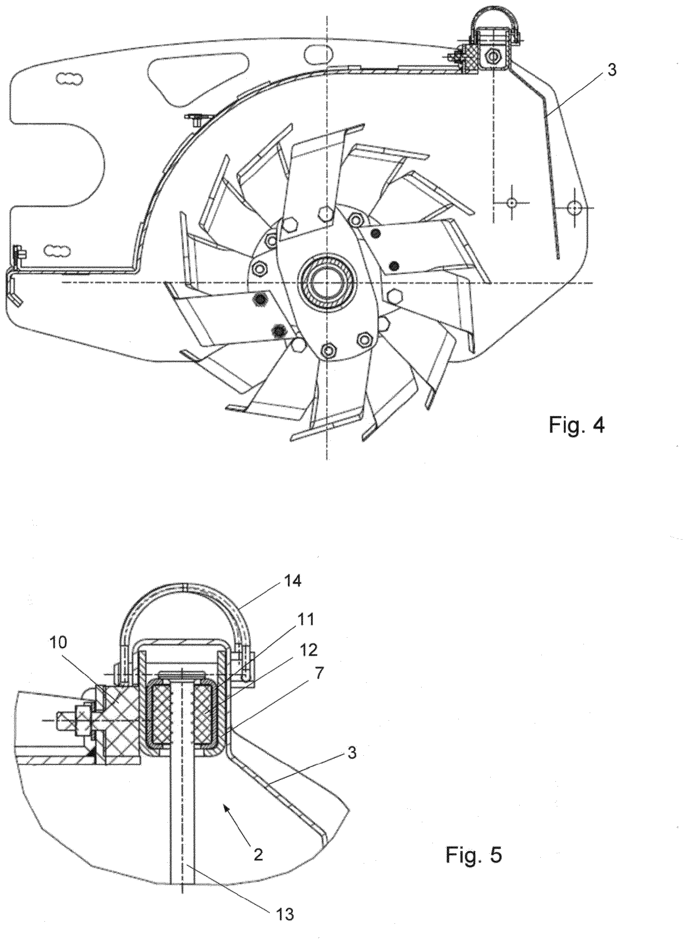

Die in Fig. 1 dargestellte Zeichnung zeigt eine Seitenansicht einer erfindungsgemässen Umkehrfräse 1 mit einer Siebeinheit 4, die einen Rechen 2 und ein Prallblech 3 beinhaltet mit einer dazugehörigen Schnittansicht. Die erfindungsgemässe Umkehrfräse 1 weist ein Gehäuse 5 auf in dem eine sich quer zur Fahrtrichtung erstreckende Messerwelle 6 zur Bodenbearbeitung angeordnet ist. Während der Bodenbearbeitung bewegt sich die Umkehrfräse in Fahrtrichtung F, wobei sich die Messerwelle 6 gegen die Fahrtrichtung dreht. Der Rechen 2 und das Prallblech 3 sind an dem am Gehäuse 5 angeordneten Halter 7 befestigt. Wobei der Rechen 2 und das Prallblech 3 jeweils separat am Halter 7 befestig sind, was gut aus der Fig. 5 zu erkennen ist. Der Halter 7 ist vorzugsweise als U-Profil ausgebildet welcher sich über die Breite der Umkehrfräse erstreckt. Der Halter 7 ist vorzugsweise beweglich am Gehäuse 5 angeordnet. Dies ist in der dargestellten Ausführungsform mit Befestigungsmitteln 8 vorzugsweise Zylinderschrauben umgesetzt, mit denen der Halter 7 an den Seitenblechen derart befestigt wird, dass ein leichtes Schwenken des Halters 7 möglich ist, dies ist gut aus der Fig. 3 zu erkennen. Zudem ist es von Vorteil, wenn der Halter 7 an Dämpfern 10 anliegt wie aus Fig. 5 gut erkennbar. Die Dämpfer 10 sind am Gehäuse 5 befestigt und stützen den Halter 7. Dies gibt dem Halter 7 wiederum eine gewisse Beweglichkeit bzw. federt den Halter 7. Durch die bewegliche Befestigung und die Dämpfung des Halters 7 wird ein Selbstreinigungseffekt neben dem modularen Aufbau der Umkehrfräse 1 erreicht.

Der Rechen 2 ist formschlüssig im Halter 7 angeordnet bzw. im U-Profil eingelegt. Der Rechen 2 weist ein Vierkantrohr 11 auf indem ein Federelement 12 vorzugsweise aus einem Elastomer angeordnet ist. Das Federelement 12 wie auch das Vierkantrohr 11 weisen Bohrungen auf durch die die einzelnen Zinken 13 des Rechens 2 hindurchgesteckt werden. Es ist von Vorteil, wenn die Bohrungen im Rohr gross mit genügend Spiel zum Zinken 13 ausgebildet sind, dies erlaubt es, dass sich die Zinken 13 unabhängig voneinander bewegen können. Im Federelement 12 sollten die Bohrungen jedoch kleiner als der Zinkendurchmesser ausgebildet sein. Dies erzeugt eine Vorspannung zwischen Rohr 11 und den Zinken 13, die wiederum die Zinken 13 bei einer Kollision schützt, indem sie gefedert sind. Das Prallblech 3 ist am Halter 7 angeordnet, wobei es an einem Ende eine Kontur aufweist, die passgenau über den Halter 7 geschoben werden kann, wodurch das Prallblech 3 formschlüssig am Halter 7 angeordnet ist und mit Befestigungsmitteln 14 vorzugsweise Klappsplinte am Halter 7 fixiert ist, dadurch wird der Rechen 2 im Halter 7 gesichert. So kann man durch Lösen der Befestigungsmittel 14 das Prallblech 3 vom Halter einfach entfernen und den Rechen 2 aufgrund seiner stabilen Bauart aus dem Halter 7 herausheben und anschliessend das Prallblech 3 wieder anbringen, dann erhält man die Umkehrfräse 1 ohne Rechen 2 für eine komplette Durchmischung des Bodens wie in Fig. 4 gezeigt. Zudem werden beim Herausheben des Rechens 2 aus dem Halter 7 Anhaftungen an den Zinken 13 oder auch Verstopfungen des Rechens 2 am Halter 7 abgestreift, wodurch die Reinigung des Rechens 2 zugleich beim Herausheben erfolgt.

### Bezugszeichenliste

- 1: Umkehrfräse
- 2: Rechen
- 3: Prallblech
- 4: Siebeinheit
- 5: Gehäuse
- 6: Messerwelle
- 7: Halter
- 8: Befestigungsmittel
- 9: Seitenblech
- 10: Dämpfer
- 11: Vierkantrohr
- 12: Federelement
- 13: Zinke
- 14: Befestigungsmittel

- A: Arbeitsfahrtrichtung

## Patentansprüche

1. Umkehrfräse (1) zum antriebsverbundenen Anbau an einer Arbeitsmaschine, vorzugsweise zum frontseitigen Anbau an einer einachsigen, Holmen geführten Arbeitsmaschine, beinhaltend ein Gehäuse (5), eine darin angeordnete sich quer zur Fahrtrichtung erstreckende Messerwelle (6) und eine Siebeinheit (4), wobei die Siebeinheit (4) ein Prallblech (3) und einen Rechen (2) beinhaltet, wobei das Prallblech (3) und der Rechen (2) jeweils separat bzw. unabhängig voneinander am Gehäuse (1) befestigt sind und zur Befestigung der Siebeinheit (4) mindestens ein Halter (7) am Gehäuse (5) angeordnet ist und dass das Prallblech (3) und der Rechen (2) jeweils unabhängig voneinander am Halter (7) befestigt sind und dadurch umbaubar und auch nur mit Prallblech betreibbar ist, wobei der Rechen (2) formschlüssig vom Halter (7) aufgenommen ist.

2. Umkehrfräse (1) nach Anspruch 1, **dadurch gekennzeichnet, dass** der Halter (7) beweglich am Gehäuse (5) angeordnet ist.

3. Umkehrfräse (1) nach einem der Ansprüche 1 oder 2, **dadurch gekennzeichnet, dass** der Halter (7) gefedert bzw. gedämpft am Gehäuse (5) angeordnet ist.

4. Umkehrfräse (1) nach einem der Ansprüche 1 bis 3 **dadurch gekennzeichnet, dass**, der Rechen (2) aus einem Rohr (11) und mehreren, dem Rohr (11) entlang der Rohrmittelachse, nebeneinander, angeordneter Zinken (13) gebildet ist.

5. Umkehrfräse (1) nach einem der Ansprüche 1 bis 4 **dadurch gekennzeichnet, dass** im Rohr (11) ein Federelement (12) angeordnet ist, durch das sich die Zinken (13) hindurch erstrecken.

6. Umkehrfräse (1) nach einem der Ansprüche 1 bis 5 **dadurch gekennzeichnet, dass** der Halter (7) als U-Profil ausgebildet ist und der Rechen (2) darin eingelegt ist.

7. Umkehrfräse (1) nach einem der Ansprüche 1 bis 6 **dadurch gekennzeichnet, dass** der Halter (7) sich über die Breite der Umkehrfräse (1) erstreckt.

8. Umkehrfräse (1) nach einem der Ansprüche 1 bis 7 **dadurch gekennzeichnet, dass** das Prallblech (3) formschlüssig am Halter (7) befestigt ist.

9. Umkehrfräse (1) nach einem der Ansprüche 1 bis 8 **dadurch gekennzeichnet, dass** der Rechen (2) mittels des Prallblechs (3) im Halter (7) gesichert angeordnet ist.

## Claims

1. Reversing rotary cutter (1) for driven attachment to a working machine, preferably the front-side attachment on a single-axle bar-guided working machine, comprising a housing (5), a cutter shaft (6) arranged therein and extending transversely to the driving direction, and a screen unit (4) wherein the screen unit (4) comprises a baffle plate (3) and a rake (2) wherein the baffle plate (3) and the rake (2) are fixed in each case separately and independently of one another on the housing (1) and in order to fix the screen unit (4) at least one holder (7) is arranged on the housing (5) and that the baffle plate (3) and the rake (2) are in each case fixed independently of one another on the holder (7) and can thereby be converted and operated only with the baffle plate wherein the rake (2) is received in form-locking manner (7 on the holder (7).

2. Reversing rotary cutter (1) according to Claim 1 **characterized in that** the holder (7) is arranged in movable manner on the housing (5).

3. Reversing rotary cutter (1) according to one of Claims 1 or 2 **characterized in that** the holder (7) is arranged sprung or damped on the housing (5).

4. Reversing rotary cutter (1) according to one of Claims 1 to 3 **characterized in that** the rake (2) is formed from a tube (11) and several tines (13) arranged next to one another on the tube (11) along the centre axis thereof.

5. Reversing rotary cutter (1) according to one of Claims 1 to 4 **characterized in that** a spring element (12) is arranged in the tube (11) and the tines (13) extend through the spring element.

6. Reversing rotary cutter (1) according to one of Claims 1 to 5 **characterized in that** the holder (7) has a U-profile configuration and the rake (2) is inserted therein.

7. Reversing rotary cutter (1) according to one of Claims 1 to 6 **characterized in that** the holder (7) extends over the width of the reversing rotary cutter (1) .

8. Reversing rotary cutter (1) according to one of Claims 1 to 7 **characterized in that** the baffle plate (3) is fixed in form-locking manner on the holder (7).

9. Reversing rotary cutter (1) according to one of Claims 1 to 8 **characterized in that** the rake (2) is arranged secured in the holder (7) by means of the baffle plate (3).

## Revendications

1. Fraiseuse réversible (1) destinée à être montée en entraînement sur une machine de travail, de préférence à être montée à l'avant d'une machine de travail pourvue d'un essieu et guidée par un longeron, ladite fraiseuse réversible comportant un boîtier (5), un arbre de couteau (6) disposé à l'intérieur et s'étendant transversalement à la direction de déplacement, et une unité de tamisage (4), l'unité de tamisage (4) comportant une plaque déflectrice (3) et un râteau (2), la plaque déflectrice (3) et le râteau (2) étant chacun fixés au boîtier (1) séparément ou indépendamment l'un de l'autre, et au moins un support (7) étant disposé sur le boîtier (5) afin de fixer l'unité de tamisage (4) et la plaque déflectrice (3) et le râteau (2) étant fixés chacun indépendamment l'un de l'autre au support (7), et ladite fraiseuse réversible donc convertible et pouvant être utilisée uniquement avec la plaque déflectrice, le râteau (2) étant reçu par complémentarité de formes par le support (7).

2. Fraiseuse réversible (1) selon la revendication 1, **caractérisée en ce que** le support (7) est disposé de manière mobile sur le boîtier (5).

3. Fraiseuse réversible (1) selon l'une des revendications 1 ou 2, **caractérisée en ce que** le support (7) est disposé sur le boîtier (5) de manière élastique ou amortie.

4. Fraiseuse réversible (1) selon l'une des revendications 1 à 3, **caractérisée en ce que** le râteau (2) est formé d'un tube (11) et de plusieurs dents (13) disposées les unes à côté des autres le long de l'axe de tube médian.

5. Fraiseuse réversible (1) selon l'une des revendications 1 à 4, **caractérisée en ce que** dans le tube (11) est disposé un élément à ressort (12) à travers lequel s'étendent les dents (13).

6. Fraiseuse réversible (1) selon l'une des revendications 1 à 5, **caractérisée en ce que** le support (7) est conçu comme un profilé en U et le râteau (2) est inséré à l'intérieur de celui-ci.

7. Fraiseuse réversible (1) selon l'une des revendications 1 à 6, **caractérisée en ce que** le support (7) s'étend sur la largeur de la fraiseuse réversible (1) .

8. Fraiseuse réversible (1) selon l'une des revendications 1 à 7, **caractérisée en ce que** la plaque déflectrice (3) est fixée au support (7) par complémentarité de formes.

9. Fraiseuse réversible (1) selon l'une des revendications 1 à 8, **caractérisée en ce que** le râteau (2) est disposé de manière sécurisée dans le support (7) au moyen de la plaque déflectrice (3).
